(19) Europäisches Patentamt / European Patent Office / Office européen des brevets

(11) **EP 4 746 233 A1**

(12) **EUROPEAN PATENT APPLICATION**
published in accordance with Art. 153(4) EPC

(43) Date of publication:
**20.05.2026 Bulletin 2026/21**

(21) Application number: **24860281.5**

(22) Date of filing: **20.08.2024**

(51) International Patent Classification (IPC):
*H02J 3/38* (2026.01)        *H02J 3/32* (2026.01)
*H02J 7/34* (2006.01)        *H02J 3/00* (2026.01)

(52) Cooperative Patent Classification (CPC):
**H02J 3/00; H02J 3/32; H02J 3/38; H02J 7/34**

(86) International application number:
**PCT/KR2024/012334**

(87) International publication number:
**WO 2025/048360 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.08.2023 KR 20230112212**

(71) Applicant: **LG Energy Solution, Ltd.
Seoul 07335 (KR)**

(72) Inventor: **CHUNG, Moon Koo
Daejeon 34122 (KR)**

(74) Representative: **BCKIP Part mbB
Landsberger Straße 98
80339 München (DE)**

(54) **MANAGEMENT DEVICE FOR CONTROLLING ENERGY STORAGE DEVICE AND OPERATING METHOD THEREFOR**

(57)    A management device configured to control an energy storage device according to one embodiment disclosed herein may include a communication circuit configured to receive regional information about the energy storage device and communication information about the energy storage device, and a controller configured to diagnose a communication state between an inverter and a converter based on the regional information and the communication information.

FIG.2

EP 4 746 233 A1

**Description**

## TECHNICAL FIELD

CROSS-REFERENCE TO RELATED APPLICATION

This application claims priority to and the benefit of Korean Patent Application No. 10-2023-0112212 filed in the Korean Intellectual Property Office on August 25, 2023, the entire contents of which are incorporated herein by reference.

TECHNICAL FIELD

Embodiments disclosed herein relate to a management device for controlling an energy storage device and a method of operating the same.

## BACKGROUND ART

An energy storage system (ESS) is a device that can achieve the efficient use of power by temporarily storing power generated from a power plant, etc. from a grid during a period of less power demand and supplying the stored power to the grid during a period of more power demand. Recently, interest in residential ESSs that may store power generated using solar power, etc. has been increasing.

The ESS largely includes an inverter connected to a grid, a battery for storing power supplied by the grid, a converter for performing DC-DC conversion, etc. The converter for performing DC-DC conversion may be connected to the inverter to exchange a communication signal, and when a failure occurs in the inverter, communication between the inverter and the converter may be cut off. However, when communication is cut off, it is difficult for the converter to distinguish whether the inverter fails due to an outage in the grid or whether the inverter fails simply. Therefore, it is necessary to diagnose a communication state between the inverter and the converter in consideration of the overall outage situation occurring in the grid.

## DISCLOSURE

## TECHNICAL PROBLEM

Embodiments disclosed herein are directed to providing a management device for diagnosing a communication state between an inverter and a converter in consideration of an outage situation and a method of operating the same.

The objects of the embodiments disclosed herein are not limited to the above-described objects, and other objects that are not described will be able to be clearly understood by those skilled in the art from the following description.

## TECHNICAL SOLUTION

A management device configured to control an energy storage device according to one embodiment disclosed herein may include a communication circuit configured to receive regional information about the energy storage device and communication information about the energy storage device, and a controller configured to diagnose a communication state between an inverter and a converter based on the regional information and the communication information.

According to one embodiment, the regional information may include information about a ratio of a total power amount consumed in a region in which the energy storage device is located to a total power amount supplied to the region in which the energy storage device is located.

According to one embodiment, the regional information may include information about an average time required to restore an outage that has occurred in a power grid of the region to which the energy storage device belongs.

According to one embodiment, the inverter and the converter may be connected through a communication line, and the communication information may include information about a length of the communication line and a communication reference time determined based on a cycle that exchanges a communication signal between the inverter and the converter.

According to one embodiment, the information about the communication reference time may have a value that increases in proportion to the length of the communication line or increases in proportion to the cycle.

According to one embodiment, when a communication signal is not transmitted from the inverter to the converter through the communication line for a threshold time, the controller may diagnose the communication state as a loss of communication (LOC) state, and calculate the threshold time based on the regional information and the communication information.

According to one embodiment, the controller may calculate the threshold time according to Equation below:

$$t_d = \text{ROUND} \left( \log T * x^r \right)$$

$t_d$: threshold time
T: average time required to restore an outage that has occurred in a region
x: communication reference time
r: ratio of total power consumption amount to total power supply amount for a region
ROUND(): rounding function.

A method of operating a management device configured to control an energy storage device may include calculating a threshold time based on regional information about the energy storage device and communication information about the energy storage device, and diagnosing a communication state between an inverter and a converter based on the threshold time.

According to one embodiment, the regional information may include information about a ratio of a total power amount consumed in a region in which the energy storage device is located to a total power amount supplied to the region in which the energy storage device is located.

According to one embodiment, the regional information may include information about an average time required to restore an outage that has occurred in a power grid of the region to which the energy storage device belongs.

According to one embodiment, the inverter and the converter may be connected through a communication line, and the communication information may include information about a length of the communication line and a communication reference time determined based on a cycle that exchanges a communication signal between the inverter and the converter.

According to one embodiment, the threshold time may be calculated according to Equation below:

$$t_d = \text{ROUND} \left( \log T * x^r \right)$$

$t_d$: threshold time
T: average time required to restore an outage that has occurred in a region
x: communication reference time
r: ratio of total power consumption amount to total power supply amount for a region
ROUND(): rounding function.

According to one embodiment, the diagnosing of the communication state may include measuring a time for which a communication signal is not received from the inverter to the converter through the communication line for a threshold time, and diagnosing the communication state as a loss of communication (LOC) state when the time for which the communication signal is not received reaches the threshold time.

ADVANTAGEOUS EFFECTS

The management device according to the embodiments disclosed herein can diagnose the communication state between the inverter and the converter in consideration of regional information and communication information.

**DESCRIPTION OF DRAWINGS**

FIG. 1 is a view for describing an energy storage system and nearby components according to one embodiment disclosed herein.
FIG. 2 is a view for describing a management device and nearby components according to one embodiment disclosed herein.
FIG. 3 is a view for describing regional information according to one embodiment disclosed herein.
FIG. 4 is a view for describing a threshold time determined according to one embodiment disclosed herein.
FIG. 5 is a flowchart for describing an operation of the management device according to one embodiment disclosed herein.

**MODE FOR INVENTION**

Hereinafter, embodiments disclosed herein will be described in detail with reference to exemplary drawings. In adding reference numerals to components in each drawing, it should be noted that the same components have the same reference numerals as much as possible even when they are shown in different drawings. In addition, in describing embodiments disclosed herein, the detailed description of related known configurations or functions will be omitted when it is determined that the detailed description obscures the understanding of the embodiments disclosed herein.

The terms, such as first, second, A, B, (a), and (b) may be used to describe components of the embodiments disclosed in this document. These terms are only for the purpose of distinguishing one component from another component, and the nature, sequence, order, or the like of the corresponding component is not limited by the terms. In addition, unless otherwise defined, all terms (including technical and scientific terms) used herein have the same meanings as those commonly understood by those skilled in the art to which embodiments disclosed herein pertains. The terms defined in a generally used dictionary should be construed as meanings that match with the meanings of the terms from the context of the related technology and are not construed as an ideal or excessively formal meaning unless clearly defined in this application.

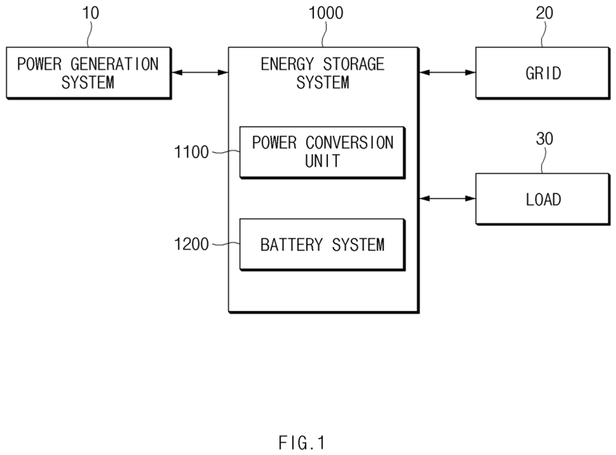

FIG. 1 is a view for describing an energy storage system and nearby components according to one embodiment disclosed herein.

Referring to FIG. 1, an energy storage system 1000 may be electrically connected to a power generation system 10, a grid 20, and a load 30.

The power generation system 10 may be a system for generating power using an energy source. The power generated by the power generation system 10 may be supplied to the energy storage system 1000. The power generation system 10 may include a solar power generation system, a wind power generation system, a tidal power generation system, etc., but is not limited to these examples. For example, the power generation system 10 may include a system for generating power using renewable energy such as solar heat, solar energy, or geothermal energy.

The grid 20 may be a network connected between power generators and power consumers as having a concept including a power plant for generating power, a substation for increasing or decreasing a voltage for transmission/distribution, a transmission line that transmits power, a distribution line that transmits power to power consumers, etc. When the grid 20 operates normally, the grid 20 may supply power to the energy storage system 1000. In addition, the grid 20 may receive power from the energy storage system 1000.

According to an embodiment, the energy storage system 1000 may be a grid-connected energy system that uses both power supplied by a power company through the grid 20 and power supplied by the power generation system 10, but is not limited thereto.

When the grid 20 does not operate normally, the power supply from the grid 20 to the energy storage system 1000 may be stopped. In addition, the power supply from the energy storage system 1000 to the grid 20 may also be stopped.

According to an embodiment, a case wherein the grid 20 does not operate normally may include a case where an outage occurs in the grid 20.

The load 30 may consume power generated by the power generation system 10, power stored in the energy storage system 1000, or power supplied from the grid 20. For example, the load 30 may collectively refer to a consumer that consumes power, such as a factory or a home.

The energy storage system 1000 may include a power conversion unit 1100 and a battery system 1200.

The power conversion unit 1100 may appropriately convert power when the energy storage system 1000 provides power to the grid 20 or the load 30 or when the power generation system 10 provides power to the energy storage system 1000. The power conversion unit 1100 may include a power conversion system (PCS). For example, the power conversion unit 1100 may convert AC power into DC power or convert DC power into AC power.

The battery system 1200 may store power provided from the power generation system 10 or the grid 20. According to an embodiment, the energy storage system 1000 may provide the power stored in the battery system 1200 to the grid 20 or the load 30. The battery system 1200 may include a battery rack, a battery module, a battery pack, etc. for storing power.

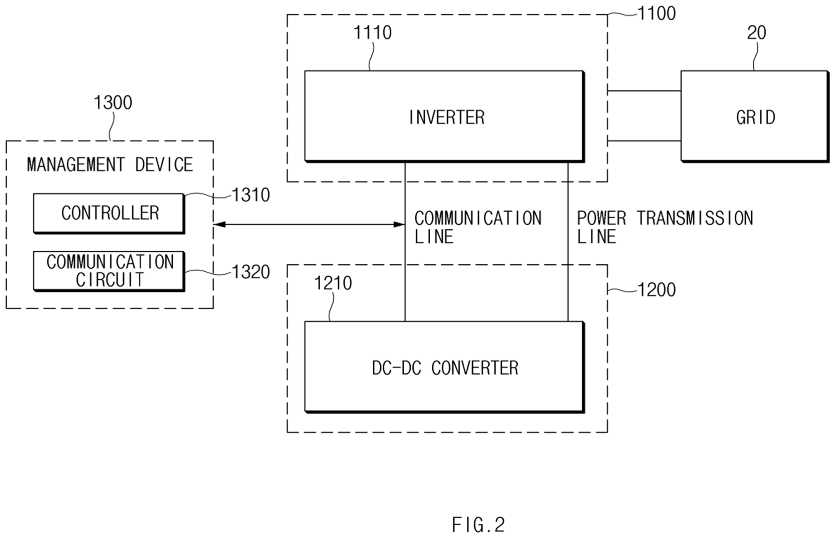

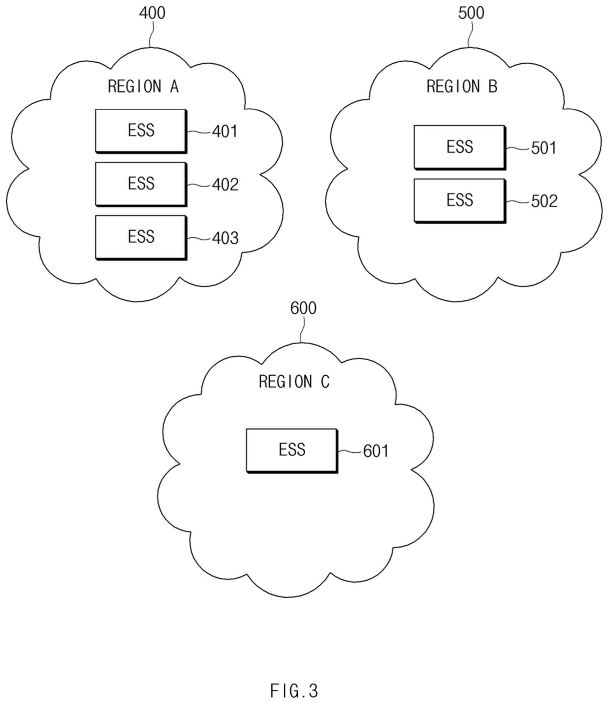

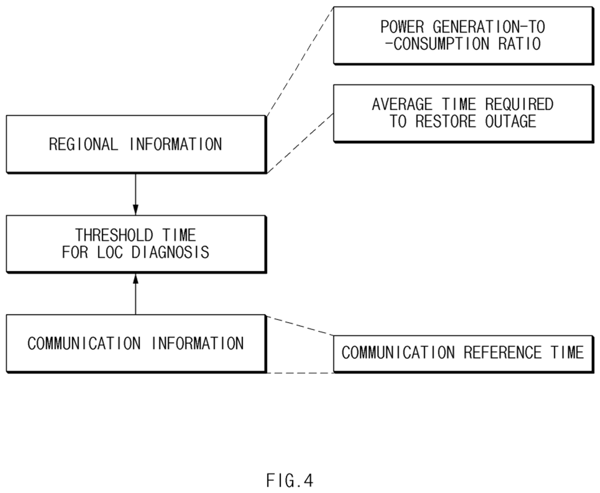

FIG. 2 is a view for describing a management device and nearby components according to one embodiment disclosed herein, FIG. 3 is a view for describing regional information according to one embodiment disclosed herein, and FIG. 4 is a view for describing a threshold time determined according to one embodiment disclosed herein.

First, referring to FIG. 2, a management device 1300 may control the overall operation of the energy storage system 1000 (see FIG. 1).

Although FIG. 2 shows that the management device 1300 is a separate device distinguished from the power conversion unit 1100 and the battery system 1200, the present document is not limited thereto, and the management device 1300 may be included in the battery system 1200 or included in the DC-DC converter 1210 to control the energy storage system 1000.

The management device 1300 may include a controller 1310 for controlling a communication line between the inverter 1110 and the DC-DC converter 1210 and a communication circuit 1320 for receiving regional information related to the energy storage system 1100 (see FIG. 1) and communication information related to the energy storage system 1100 (see FIG. 1).

The controller 1310 may diagnose a communication state by comparing the time the communication signal is not transmitted from the inverter 1110 to the DC-DC converter 1210 through the communication line with a threshold time.

The communication circuit 1320 may be configured to receive the regional information and the communication information. For example, the communication circuit 1320 may receive, from the outside, regional information including information about a regional power generation-to-consumption ratio or an average time required to restore an outage that has occurred in a region. According to an embodiment, the regional information may include energy statistics, etc., which are the results of a survey conducted by the National Statistical Office, a power generation company, etc.

According to an embodiment, the communication circuit 1320 may be configured to receive, from the outside, communication information including information about a communication reference time.

According to an embodiment, the DC-DC converter 1210 may provide the controller 1310 with an enable signal representing whether the communication signal transmitted from the inverter 1110 is received. The controller 1310 may diagnose the communication state between the DC-DC converter 1210 and the inverter 1110 based on a logic state of the enable signal. For example, when the enable signal is in a logic high state, the controller 1310 may diagnose that communication between the inverter 1110 and the DC-DC converter 1210 is in a state of being performed normally. However, it is an example, and when the enable signal is in a logic low state, the controller 1310 may also diagnose that the communication between the inverter 1110 and the DC-DC converter 1210 is in a state of being performed normally.

According to an embodiment, when the management device 1300 is included inside the DC-DC converter 1210, the controller 1310 may directly measure the time for which no communication signal is transmitted from the inverter 1110 to diagnose the communication state between the DC-DC converter 1210 and the inverter 1110.

According to an embodiment, when the communication signal is not transmitted from the inverter 1110 to the DC-DC converter 1210 for the threshold time, the controller 1310 may diagnose the communication state between the inverter 1110 and the DC-DC converter 1210 as a loss of communication (LOC) state.

According to an embodiment, the threshold time may be determined based on regional information, which is information about a region in which the energy storage system 1000 is located, and communication information related to the energy storage system 1000. The reason for considering the regional information related to the region in which the energy storage system 1000 is located will be described with reference to FIG. 3.

Referring to FIG. 3, energy storage systems located in regions 400, 500, and 600 are shown.

According to an embodiment, three energy storage systems 401, 402, and 403, power generation facilities, etc. may be located in Region A 400, two energy storage systems 501 and 502, power generation facilities, etc. may be located in Region B 500, and one energy storage system 601, power generation facilities, etc. may be located in Region C 600, but the present document is not limited to these examples.

According to an embodiment, the regional information may include information about a region that includes an energy storage system. According to an embodiment, criteria for classifying regions may be criteria for classifying our country into administrative districts, such as a special city, metropolitan cities, special self-governing provinces, provinces, cities, counties, districts, etc., but are not limited thereto.

Each of the classified regions Region A, Region B, and Region C may have a difference in power consumption amount and power supply amount depending on whether a grid, a power generation system, an industrial facility, etc. is present. For example, a region (e.g., Region A) in which many industrial facilities, industrial complexes, etc. are located may have larger amounts of supplied and consumed power than in other regions, and a region (e.g., Region C) with a low population density or densely populated residential area may have smaller amounts of supplied and consumed power in other regions.

In addition, the time required to restore an outage that has occurred in a specific region may also vary depending on the number of facilities and population density that are included in the regions Region A, Region B, and Region C. For example, a region (e.g., Region A) with a high population density and a large number of facilities or energy storage systems may have increased complexity of a power grid system, resulting in further increasing the time required to restore an outage. Therefore, when the regional information is determined in consideration of the above variables, the communication state that has occurred between the inverter and the converter can be diagnosed more accurately.

Referring to FIG. 4, the threshold time may be determined in further consideration of the communication information in addition to the regional information.

According to an embodiment, the regional information may include information about a power generation-to-consumption ratio and information about the average time required to restore the outage that has occurred in the region.

The controller 1310 (see FIG. 2) may determine the threshold time based on the regional information including the power generation-to-consumption ratio and the time required to restore the outage that has occurred in the region.

According to an embodiment, the power generation-to-consumption ratio may include information about a ratio calculated by dividing the power consumption amount consumed in a specific region by the power supply amount supplied to the specific region. For example, assuming that regions are classified into administrative districts by 'city,' the power generation-to-consumption ratio may include information about a ratio calculated by dividing the total power consumption amount consumed in each 'city' by the total power supply amount supplied to the 'city.' According to an embodiment, the power generation-to-consumption ratio may be calculated based on energy-related statistical data, etc.

The time required to restore the outage that has occurred in the region may include information about the average time required to restore the outage that has occurred in the region. For example, assuming that regions are classified into administrative districts by 'city,' the time required to restore the outage that has occurred in the region may include information about an average time, which is an average value of the times required to restore the outage that has occurred in 'cities.' According to an embodiment, the information about the average time required to restore the outage may be calculated based on energy-related statistical data, etc.

The management device for managing the energy storage systems 401, 402, 403, 501, 502, and 601 located in the regions 400, 500, and 600 may determine the threshold time for diagnosing the communication state between the inverter and the converter in consideration of the above regional information.

According to an embodiment, the controller 1310 (see FIG. 1) of the management device for managing the energy storage system (e.g., 401) located in Region A 400 may consider the power generation-to-consumption ratio of Region A 400 and the average time required to restore the outage that has occurred in Region A 400, the controller 1310 for managing the energy storage system (e.g., 501) located in Region B 500 may consider the power generation-to-consumption ratio of Region B 500 and the average time required to restore the outage that has occurred in Region B 500, and the controller 1310 of the management device for managing the energy storage system (e.g., 601) located in Region C 600 may consider the power generation-to-consumption ratio of Region C 600 and the average time required to restore the outage that has occurred in Region C 600.

Hereinafter, although a case where the controller 1310 of the management device 1300 connected to the energy storage system 401 located in Region A 400 determines the threshold time will be described as an example, the following description may also be applied to the controller 1310 of the management device 1300 connected to other energy storage systems 402, 403, 501, 502, and 601 substantially in the same manner.

The controller 1310 (see FIG. 2) may determine the threshold time based on the communication information including the information about the communication reference time.

According to an embodiment, the communication information may include the information about the communication reference time.

According to an embodiment, the communication reference time may be a theoretical threshold time for diagnosing the communication state between the inverter 1110 (see FIG. 2) and the DC-DC converter 1210 (see FIG. 2) that are connected through the communication line.

According to an embodiment, the communication reference time may vary based on the length of the communication line (see FIG. 2) connected between the inverter 1110 and the DC-DC converter 1210. In addition, the communication reference time may vary based on a cycle for exchanging a communication signal between the inverter 1110 and the DC-DC converter 1210.

For example, when the length of the communication line between the inverter 1110 and the DC-DC converter 1210 is relatively long, it may take a long time to exchange the communication signal between the inverter 1110 and the DC-DC converter 1210. Therefore, when the communication reference time is excessively short, there is a high possibility that a misdiagnosis that a problem has occurred in the communication state between the inverter 1110 and the DC-DC converter 1210 occurs even though there is no communication cutoff state. This is also applied to a case where the cycle for exchanging communication signal between the inverter 1110 and the DC-DC converter 1210 is relatively long.

According to an embodiment, the communication reference time may increase in proportion to the length of the communication line between the inverter 1110 and the DC-DC converter 1210, and the communication reference time may increase in proportion to the cycle for exchanging communication signal between the inverter 1110 and the DC-DC converter 1210.

The threshold time may be a reference time for diagnosing the communication state between the inverter 1110 and the DC-DC converter 1210 shown in FIG. 2. According to an embodiment, when communication between the inverter 1110 and the DC-DC converter 1210 is not performed for the threshold time, the controller 1310 may diagnose the communication state between the inverter 1110 and the DC-DC converter 1210 as a LOC state.

When the communication state between the inverter 1110 and the DC-DC converter 1210 is the LOC state, the controller 1310 may control power to be supplied from the DC-DC converter 1210 to the inverter 1110.

According to an embodiment, the controller 1310 may control the battery system 1200 to supply the power stored in the battery system 1200 to the inverter 1110. Energy stored in a battery rack, a battery pack, or a battery module included in the battery system 1200 may be supplied from the DC-DC converter 1210 to the inverter 1110 through the power transmission line (see FIG. 2).

The controller 1310 (see FIG. 2) may calculate the threshold time based on regional information and communication information. According to an embodiment, the controller 1310 may calculate the threshold time according to the following equation in consideration of the regional information and the communication information.

$$[\text{Equation 1}]$$

$$t_d = \text{ROUND}\,(\log T * x^r)$$

$t_d$: threshold time
T: average time required to restore an outage that has occurred in a region
x: communication reference time
r: ratio of total power consumption amount to total power supply amount for a region
ROUND(): rounding function

According to an embodiment, when the power statistics of Region A 400 are as follows, the controller 1310 may calculate the threshold time for diagnosing the LOC state between the inverter 1110 and the DC-DC converter 1210 as follows.

According to an embodiment, when the power supply amount of Region A 400 is 122 GWh and the power consumption amount of Region A 400 is 130 GWh, the controller 1310 may calculate a power generation-to-consumption ratio of Region A 400 as r = 130(Gwh) / 122(Gwh) = 1.06.

According to an embodiment, the average time required to restore the outage that has occurred in Region A 400 may be 600 seconds.

According to an embodiment, the communication reference time determined according to the length of the communication line and communication signal exchange cycle between the inverter 1110 and the DC-DC converter 1210 of the energy storage system 1000 located in Region A 400 may be 10 seconds.

According to an embodiment, the controller 1310 may calculate the threshold time for diagnosing the LOC state as ROUND (log600 * 10^1.06) = 32s. Here, the ROUND() function may be a function that rounds a value in parentheses.

According to an embodiment, when the communication signal is not transmitted from the inverter 1110 to the DC-DC converter 1210 of the energy storage system 1000 included in Region A 400 for 32 seconds, the controller 1310 may diagnose the communication state between the inverter 1110 and the DC-DC converter 1210 as a LOC state. That is, when the communication signal is not transmitted from the inverter 1110 to the DC-DC converter 1210 for 32 seconds, the controller 1310 may supply the energy stored in the battery system 1200 (see FIG. 1) to the inverter 1110 through the power transmission line.

When the controller 1310 diagnoses the communication state between the inverter 1110 and the DC-DC converter 1210, whether the grid 20 (see FIG. 1) is in an outage state is not generally considered. However, the case where the communication between the inverter 1110 and the DC-DC converter 1210 is cut off may include a case where the inverter 1110 is blacked out by an outage in the grid 20 to cut off the communication between the inverter 1110 and the DC-DC converter 1210, and a case where an outage has not occurred in the grid 20 but the communication between the inverter 1110 and the DC-DC converter 1210 is cut off due to an abnormality or failure in the inverter 1110 or the DC-DC converter 1210. Among these cases, the case where the outage has not occurred in the grid 20 but the communication between the inverter 1110 and the DC-DC converter 1210 is cut off, power supply to the inverter 1110 is not required, but an unnecessary operation may be accompanied like the case where the controller 1310 supplies power to the inverter 1110.

Therefore, according to one embodiment disclosed herein, the controller 1310 may consider the outage state of the grid 20 when diagnosing the communication state between the inverter 1110 and the DC-DC converter 1210. In addition, information about the region in which the energy storage system 1000 is located may be further considered, thereby reducing misdiagnosis about communication cutoff occurring between the inverter 1110 and the DC-DC converter 1210.

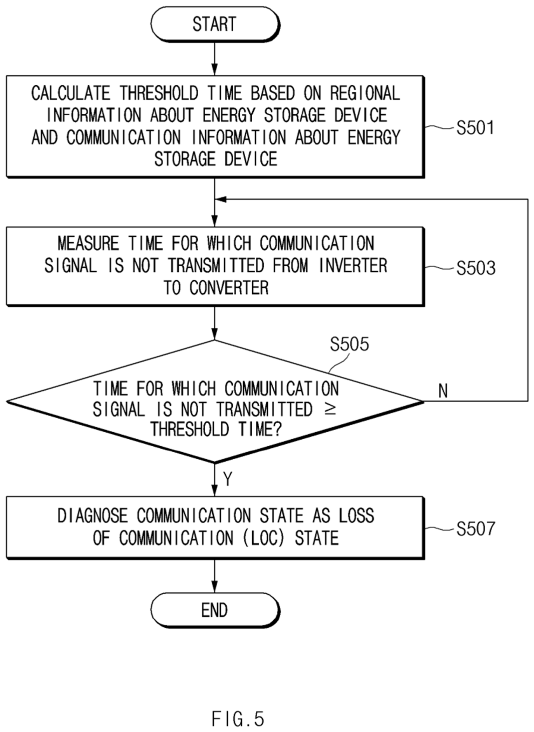

FIG. 5 is a flowchart for describing an operation of the management device 1300 (see FIG. 2) according to one embodiment disclosed herein.

Referring to FIG. 5, in operation S501, the management device 1300 may calculate the threshold time based on the regional information about the energy storage device 1000 (see FIG. 1) and the communication information about the energy storage device.

According to an embodiment, the threshold time may be a reference time for diagnosing the communication state between the inverter 1110 (see FIG. 2) and the DC-DC converter 1210 (see FIG. 2) included in the energy storage device 1000. For example, when the communication signal is not transmitted from the inverter 1110 to the DC-DC converter 1210 for the threshold time, the management device 1300 may diagnose the communication state between the inverter 1110 and the DC-DC converter 1210 as a LOC state.

According to an embodiment, the regional information may include information about a power generation-to-consumption ratio of the corresponding region and information about the average time required to restore the outage that has occurred in the corresponding region.

In operation S503, when no communication signal is transmitted from the inverter 1110 to the DC-DC converter 1210, the management device 1300 may measure the time for which the communication signal is not received.

In operation S505, when the time for which no communication signal is transmitted from the inverter 1110 to the DC-DC converter 1210 reaches the threshold time (Y), the management device 1300 may diagnose the communication status between the inverter 1110 and the DC-DC converter 1210 as a LOC state (S507). When the time for which no communication signal is received does not reach the threshold time (N), the management device 1300 may re-monitor the time for which no communication signal is transmitted from the inverter 1110 to the DC-DC converter 1210.

All components constituting the embodiments have been described above as being coupled as one or operated by being coupled, but are not necessarily limited to these embodiments, and within the scope of the purpose, one or more of all components may be operated by being selectively coupled. In addition, the terms such as "comprise," "constitute," or "have" described above mean that the corresponding component may be inherent unless otherwise stated, and thus should be construed as further including another component rather than excluding another component.

The above description is merely the exemplary description of the technical spirit disclosed herein, and those skilled in the art to which embodiments disclosed herein pertain will be able to variously modify and change the embodiments without departing from the essential characteristics of the embodiments disclosed herein.

Therefore, the embodiments disclosed herein are not intended to limit the technical spirit disclosed herein, but for describing it, and the scope of the technical spirit disclosed herein is not limited by these embodiments. The scope of the technical spirit disclosed herein should be construed by the appended claims, and all technical spirits within the equivalent range should be construed as being included in the scope of this document.

[DESCRIPTION OF REFERENCE NUMERALS]

| | |
|---|---|
| 10: power generation system | 20: grid |
| 30: load | 1000: energy storage system |
| 1100: power conversion unit | 1110: inverter |
| 1200: battery system | 1210: DC-DC converter |
| 1300: management device | 1310: controller |
| 1320: communication circuit | |

**Claims**

1. A management device configured to control an energy storage device, comprising:

   a communication circuit configured to receive regional information about the energy storage device and communication information about the energy storage device; and
   a controller configured to diagnose a communication state between an inverter and a converter based on the regional information and the communication information.

2. The management device of claim 1, wherein the regional information includes information about a ratio of a total power amount consumed in a region in which the energy storage device is located to a total power amount supplied to the region in which the energy storage device is located.

3. The management device of claim 1, wherein the regional information includes information about an average time required to restore an outage that has occurred in a power grid of the region to which the energy storage device belongs.

4. The management device of claim 1, wherein the inverter and the converter are connected through a communication line, and
   the communication information includes information about a length of the communication line and a communication reference time determined based on a cycle that exchanges a communication signal between the inverter and the converter.

5. The management device of claim 4, wherein the information about the communication reference time is a value that increases in proportion to the length of the communication line or increases in proportion to the cycle.

6. The management device of claim 1, wherein, when a communication signal is not transmitted from the inverter to the converter through the communication line for a threshold time, the controller diagnoses the communication state as a loss of communication (LOC) state, and
calculates the threshold time based on the regional information and the communication information.

7. The management device of claim 6, wherein the controller calculates the threshold time according to Equation below:

$$t_d = \text{ROUND} (\log T * x^r)$$

$t_d$: threshold time
T: average time required to restore an outage that has occurred in a region
x: communication reference time
r: ratio of total power consumption amount to total power supply amount for a region
ROUND(): rounding function.

8. A method of operating a management device configured to control an energy storage device, the method comprising:

calculating a threshold time based on regional information about the energy storage device and communication information about the energy storage device; and
diagnosing a communication state between an inverter and a converter based on the threshold time.

9. The method of claim 8, wherein the regional information includes information about a ratio of a total power amount consumed in a region in which the energy storage device is located to a total power amount supplied to the region in which the energy storage device is located.

10. The method of claim 8, wherein the regional information includes information about an average time required to restore an outage that has occurred in a power grid of the region to which the energy storage device belongs.

11. The method of claim 8, wherein the inverter and the converter are connected through a communication line, and the communication information includes information about a length of the communication line and a communication reference time determined based on a cycle that exchanges a communication signal between the inverter and the converter.

12. The method of claim 8, wherein the threshold time is calculated according to Equation below:

$$t_d = \text{ROUND} (\log T * x^r)$$

$t_d$: threshold time
T: average time required to restore an outage that has occurred in a region
x: communication reference time
r: ratio of total power consumption amount to total power supply amount for a region
ROUND(): rounding function.

13. The method of claim 11, wherein the diagnosing of the communication state includes:

measuring a time for which a communication signal is not received from the inverter to the converter through the communication line for a threshold time; and
diagnosing the communication state as a loss of communication (LOC) state when the time for which the communication signal is not received reaches the threshold time.

10

1000

20

POWER GENERATION
SYSTEM

ENERGY STORAGE
SYSTEM

GRID

1100

POWER CONVERSION
UNIT

30

LOAD

1200

BATTERY SYSTEM

FIG.1

FIG. 2

GRID — 20

1100
INVERTER — 1110
POWER TRANSMISSION LINE
COMMUNICATION LINE

1200
DC-DC CONVERTER — 1210

MANAGEMENT DEVICE — 1300
CONTROLLER — 1310
COMMUNICATION CIRCUIT — 1320

400

REGION A

ESS ~401

ESS ~402

ESS ~403

500

REGION B

ESS ~501

ESS ~502

600

REGION C

ESS ~601

FIG.3

POWER GENERATION-TO
-CONSUMPTION RATIO

AVERAGE TIME REQUIRED
TO RESTORE OUTAGE

REGIONAL INFORMATION

THRESHOLD TIME
FOR LOC DIAGNOSIS

COMMUNICATION INFORMATION

COMMUNICATION REFERENCE TIME

FIG.4

START

CALCULATE THRESHOLD TIME BASED ON REGIONAL INFORMATION ABOUT ENERGY STORAGE DEVICE AND COMMUNICATION INFORMATION ABOUT ENERGY STORAGE DEVICE — S501

MEASURE TIME FOR WHICH COMMUNICATION SIGNAL IS NOT TRANSMITTED FROM INVERTER TO CONVERTER — S503

S505

TIME FOR WHICH COMMUNICATION SIGNAL IS NOT TRANSMITTED ≥ THRESHOLD TIME?

N

Y

DIAGNOSE COMMUNICATION STATE AS LOSS OF COMMUNICATION (LOC) STATE — S507

END

FIG.5

## INTERNATIONAL SEARCH REPORT

| International application No. |
|---|
| **PCT/KR2024/012334** |

### A. CLASSIFICATION OF SUBJECT MATTER

**H02J 3/38**(2006.01)i; **H02J 3/32**(2006.01)i; **H02J 7/34**(2006.01)i; **H02J 3/00**(2006.01)i

According to International Patent Classification (IPC) or to both national classification and IPC

### B. FIELDS SEARCHED

Minimum documentation searched (classification system followed by classification symbols)

H02J 3/38(2006.01); G06F 1/30(2006.01); H02J 3/00(2006.01); H02J 9/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에너지 저장 장치(ESS, Energy Storage System), 컨버터(converter), 인버터 (inverter), 정전(power failure), 통신선(communication line)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0056956 A (DYNAPOWER COMPANY LLC) 25 May 2020 (2020-05-25)<br>See paragraphs [0050]-[0062], [0064] and [0074]; and figures 1-3 and 5. | 1-13 |
| Y | KR 10-2011-0097379 A (SAMSUNG SDI CO., LTD.) 31 August 2011 (2011-08-31)<br>See paragraphs [0024]-[0028] and [0040]-[0045]; and figures 1-2. | 1-13 |
| Y | KR 10-2020-0080974 A (CHOE, Cheol Yong) 07 July 2020 (2020-07-07)<br>See paragraphs [0011] and [0054]-[0058]. | 4-7,11-13 |
| A | KR 10-2161000 B1 (IF TECH CO., LTD.) 29 September 2020 (2020-09-29)<br>See paragraphs [0033]-[0046]. | 1-13 |
| A | US 2011-0208370 A1 (LEE, Sung-Im) 25 August 2011 (2011-08-25)<br>See paragraphs [0050]-[0073]. | 1-13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 November 2024** | **22 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
#### Information on patent family members

International application No.

**PCT/KR2024/012334**

| Patent document cited in search report | | | Publication date (day/month/year) | Patent family member(s) | | | Publication date (day/month/year) |
|---|---|---|---|---|---|---|---|
| KR | 10-2020-0056956 | A | 25 May 2020 | AU | 2018-269183 | A1 | 16 January 2020 |
| | | | | AU | 2018-269183 | B2 | 02 February 2023 |
| | | | | CA | 3067343 | A1 | 22 November 2018 |
| | | | | CN | 110915090 | A | 24 March 2020 |
| | | | | CN | 110915090 | B | 24 October 2023 |
| | | | | EP | 3625865 | A1 | 25 March 2020 |
| | | | | JP | 2020-520228 | A | 02 July 2020 |
| | | | | JP | 7248593 | B2 | 29 March 2023 |
| | | | | US | 10996644 | B2 | 04 May 2021 |
| | | | | US | 11936187 | B2 | 19 March 2024 |
| | | | | US | 2018-0329382 | A1 | 15 November 2018 |
| | | | | US | 2021-0255595 | A1 | 19 August 2021 |
| | | | | WO | 2018-213273 | A1 | 22 November 2018 |
| | | | | ZA | 201908322 | B | 28 April 2021 |
| KR | 10-2011-0097379 | A | 31 August 2011 | KR | 10-1097265 | B1 | 22 December 2011 |
| | | | | US | 2011-0208370 | A1 | 25 August 2011 |
| | | | | US | 8938323 | B2 | 20 January 2015 |
| KR | 10-2020-0080974 | A | 07 July 2020 | KR | 10-2299192 | B1 | 06 September 2021 |
| KR | 10-2161000 | B1 | 29 September 2020 | | None | | |
| US | 2011-0208370 | A1 | 25 August 2011 | KR | 10-1097265 | B1 | 22 December 2011 |
| | | | | KR | 10-2011-0097379 | A | 31 August 2011 |
| | | | | US | 8938323 | B2 | 20 January 2015 |

Form PCT/ISA/210 (patent family annex) (July 2022)

**REFERENCES CITED IN THE DESCRIPTION**

**Patent documents cited in the description**

- KR 1020230112212